# EUROPÄISCHE PATENTSCHRIFT

(11) **EP 1 917 157 B1**
(45) Veröffentlichungstag und Bekanntmachung des Hinweises auf die Patenterteilung: **19.11.2008**
(21) Anmeldenummer: 06776907.5
(22) Anmeldetag: 17.08.2006
(51) Int. Cl.: B60N 2/225

(54) **GETRIEBESTUFE**
ECCENTRICITY GEAR STEP
ETAGE DE TRANSMISSION

(30) Priorität: 23.08.2005 DE 102005039733; 09.02.2006 DE 102006005906
(43) Veröffentlichungstag der Anmeldung: 07.05.2008
(73) Patentinhaber: KEIPER GmbH & Co. KG, 67657 Kaiserslautern (DE)
(72) Erfinder: SCHÜLER, Rolf, 42579 Heiligenhaus (DE); BERRES, Michael, 51375 Leverkusen (DE); BOSSMANNS, Bernd, 40699 Erkrath (DE); KALMUS, Karsten, 44799 Bochum (DE)
(74) Vertreter: Patentanwälte Hosenthien-Held und Dr. Held
(86) Internationale Anmeldenummer: PCT/EP2006/008102
(87) Internationale Veröffentlichungsnummer: WO 2007/022909

(56) Entgegenhaltungen:
- DD-A1- 256 904
- DE-A1- 10 144 840
- DE-A1- 19 709 852
- DE-B3- 10 232 247
- FR-A- 601 616

## Beschreibung

Die Erfindung betrifft eine Getriebestufe mit den Merkmalen des Oberbegriffs des Anspruches 1.

Eine Getriebestufe dieser Art zeigt die DD 256 904 A1 welche den nächstliegenden Stand der Technik bildet. Der Wälzkörper rollt auf dem Antrieb ab und drückt den elastisch gelagerten, ringförmigen Abtrieb gegen das gleichfalls elastisch gelagerte Gehäuse.

Aus der DE 197 09 852 C2 ist eine Getriebestufe bekannt, bei welcher eine Schnecke auf einer Motorwelle als Antrieb dient und in ein Schneckenrad als Abtrieb greift. Diese Getriebestufe ist ein integraler Bestandteil eines Stellantriebs, bei dem das Schneckenrad dann einen Getriebebeschlag zur Einstellung eines Fahrzeugsitzes antreibt. Durch geeignete Gewindesteigungen der Schnecke und des Schneckenrades untersetzt die Getriebestufe die hohe Motordrehzahl in eine kleinere Eingangsdrehzahl des Getriebebeschlags.

Der Erfindung liegt die Aufgabe zu Grunde, eine Getriebestufe der eingangs genannten Art zu verbessern, insbesondere hinsichtlich Übersetzungsverhältnis und Wirkungsgrad. Diese Aufgabe wird erfindungsgemäß durch eine Getriebestufe mit den Merkmalen des Anspruches 1 gelöst. Vorteilhafte Ausgestaltungen sind Gegenstand der Unteransprüche.

Der Antrieb lagert mittels wenigstens eines gesondert ausgebildeten Wälzkörpers den Abtrieb unter parallelem Versatz der Achsen um eine Exzentrizität und treibt bei einer Drehung des so gebildeten Wälzexzenters an, wobei der angetriebene Abtrieb mittels eines Reibradtaumelgetriebes eine insbesondere taumelnde Abwälzbewegung am Gehäuse vollführt.

Zum gesamten Übersetzungsverhältnis trägt zu einem gewissen Anteil der Wälzexzenter zwischen Antrieb und Abtrieb bei. Gegenüber einem einfachen Abwälzen des Wälzkörpers sowohl am Antrieb als auch am Abtrieb werden Verbesserungen durch die Ausbildung der Nut für den kugelförmigen Wälzkörper an einem der beiden Bauteile erreicht, indem durch die schräge Seitenwände unterschiedliche Wälzradien eingestellt werden können.

Zum gesamten Übersetzungsverhältnis trägt vorrangig das Reibradtaumelgetriebe bei, welches bei kleiner Exzentrizität eine geringe, taumelnde Relativbewegung zwischen Abtrieb und Gehäuse bewirkt. Der Wälzpunkt, welcher vorzugsweise zwischen einem Reifen des Abtriebs und einer - schräge Seitenflächen aufweisenden - Führung des Gehäuses entsteht, dient als Momentanpol der taumelnden Abwälzbewegung des Abtriebs. Eine vorzugsweise durch ein Verkeilen von Antrieb, Wälzkörper und Abtrieb mit einer Drehung des Antriebs aufgebaute Kraft übt im Wälzpunkt das antreibende Moment auf den Abtrieb aus. Ein Freidrehen des Antriebs nach Beendigung seiner antreibenden Drehung baut diese Kraft wieder ab und schont die Bauteile.

Somit wird das gesamte Übersetzungsverhältnis gegenüber der bekannten Getriebestufe vergrößert. Gleichzeitig wird auch der Wirkungsgrad signifikant verbessert, so dass der Gesamtwirkungsgrad beispielsweise eines Stellantriebes, in welchem die erfindungsgemäße Getriebstufe bevorzugt verwendet wird, ebenfalls verbessert wird, was eine Reduzierung von Gewicht und beanspruchtem Bauraum der benötigten Bauteile erlaubt. Das "Lagern" des Abtriebs durch den Antrieb soll so verstanden werden, dass auch eine teilweise Lagerung des Abtriebs am Gehäuse verwirklicht sein kann.

Die Abwälzbewegung des Abtriebs ist in der Regel eine Drehbewegung mit einer überlagerten Taumelbewegung, jedoch kann die taumelnde Abwälzbewegung durch geeignete Mittel ausgeglichen werden, insbesondere bei kleiner Exzentrizität, welche vorzugsweise kleiner oder gleich 0,5 mm ist, beispielsweise durch ein Spiel zwischen Abtrieb und anzutreibendem, nachgeschaltetem Getriebebeschlag (lastaufnehmendem Getriebe) o.ä. oder durch geeignete Elastizitäten dieser Teile. Bei größeren Exzentrizitäten kann auch dem beanspruchten Abtrieb ein weiteres Bauteil nachgeschaltet sein, welches den eigentlichen Abtrieb der Getriebestufe bildet und relativ zum beanspruchten Abtrieb eine Drehbewegung mit einer überlagerten Taumelbewegung vornimmt, relativ zum Antrieb aber eine reine Drehbewegung ausführt.

Günstige geometrische Verhältnisse sorgen für eindeutige, berechenbare Relativbewegungen. Durch zwei gegeneinander verspannte Wälzkörper kann ein Leerweg am Beginn der Drehung des Antriebs vermieden werden, und die Getriebestufe wird selbsthemmend. Ein bevorzugter Schmierstoff sorgt unter hohen Flächenpressungen für hohe Reibwerte bei geringem Verschleiß. Der Antrieb kann mittels eines Wälzlagers am Gehäuse gelagert sein.

Kombinationen der erfindungsgemäßen Getriebestufe erfolgen bevorzugt mit elektronisch kommutierten Motoren, wobei die Getriebestufe mit dem elektronisch kommutierten Motor vorzugsweise in eine gemeinsame Antriebseinheit integriert ist, vorzugsweise das Gehäuse Statorpakete und der Antrieb Rotormagnete trägt, und vorzugsweise Mittel zur Erfassung der Winkellage des Abtriebs vorgesehen sind, und mit selbsthemmenden Getriebebeschlägen mit Exzenterumlaufgetrieben, wobei der Abtrieb mittels einer Welle einen Mitnehmer des Getriebebeschlags antreiben kann.

In bevorzugter Ausführung besteht wenigstens eines der Getriebeelemente Gehäuse, Antrieb und Abtrieb, vorzugsweise alle, aus einem Kunststoff-Metall-Verbundmaterial. Die darin enthaltenen Metallteile gewährleisten eine hohe Belastbarkeit, während die Kunststoffbereiche komplizierte Geometrien, eine kostengünstige Herstellung, ein geringeres Gewicht und sehr gute Dämpfungseigenschaften in den nicht-lastauf-nehmenden Bereichen erlauben. Die Metallteile werden vorzugsweise aus dünnen Blechen aus hochfestem Metall und/oder mit näherungsweise konstanter Materialstärke und/oder spanlos hergestellt, was eine teure spanende Nacharbeit vermeidet. Vorzugsweise werden die zusammengehörenden Metallteile mit dem Kunststoff, insbesondere einem hochfest werdenden Kunststoff, umspritzt und dadurch miteinander verbunden.

Im folgenden ist die Erfindung anhand zweier in der Zeichnung dargestellter Ausführungsbeispiele näher erläutert. Es zeigen
- Fig. 1: einen Axialschnitt durch das erste Ausführungsbeispiel entlang der Linie I-I in Fig. 2,
- Fig. 2: einen Radialschnitt durch das erste Ausführungsbeispiel entlang der Linie II-II in Fig. 1,

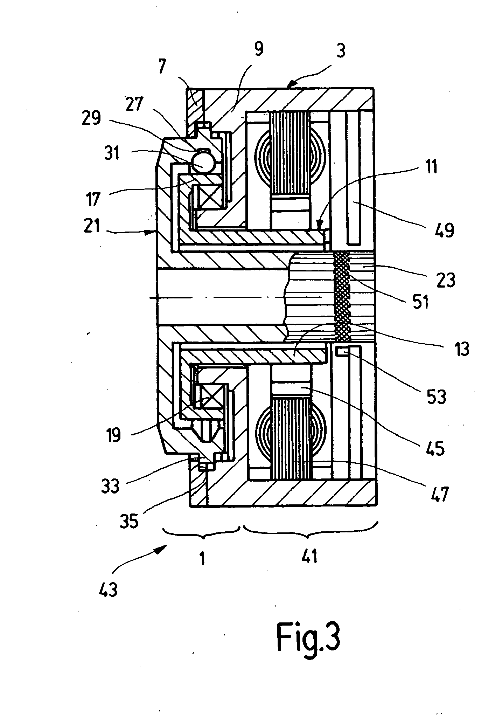

- Fig. 3: einen Fig. 1 entsprechenden Schnitt durch eine erste Anwendung der Erfindung,

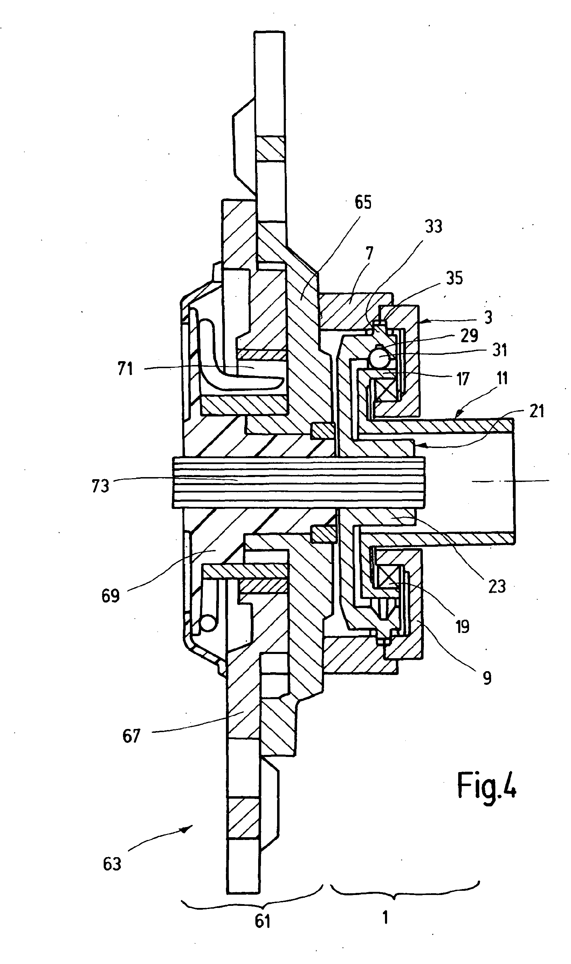

- Fig. 4: einen Fig. 1 entsprechenden Schnitt durch eine zweite Anwendung der Erfindung,

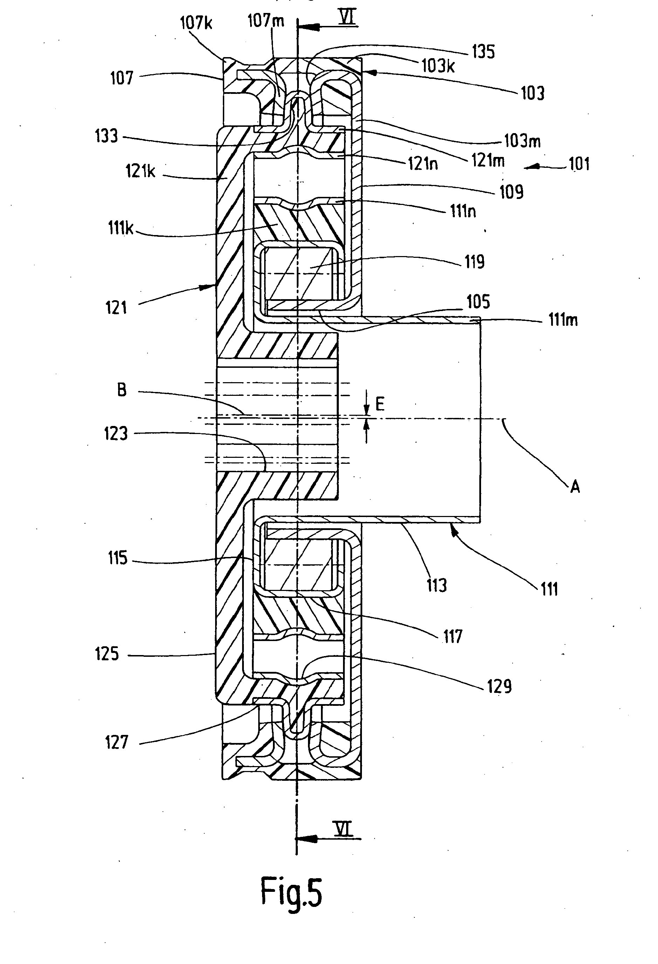

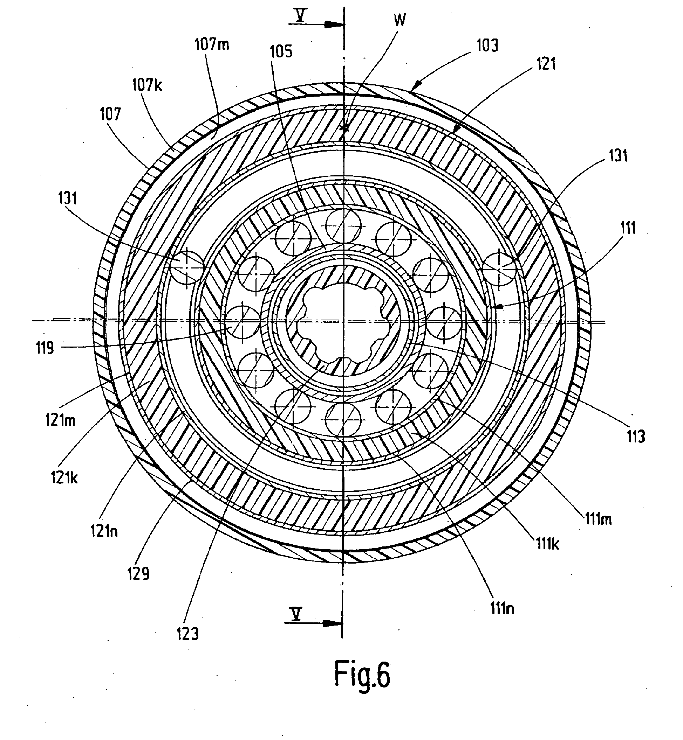

- Fig. 5: einen Axialschnitt durch das Ausführungsbeispiel entlang der Linie V-V in Fig. 6, und
- Fig. 6: einen Radialschnitt durch das Ausführungsbeispiel entlang der Linie VI-VI in Fig. 5.

Im ersten Ausführungsbeispiel weist eine Getriebstufe 1 ein nährungsweise zylindersymmetrisches Gehäuse 3 mit einer zentralen ersten Achse A auf. Konzentrisch zur ersten Achse A ist am Gehäuse 3 radial innen ein Gehäuse-Kragenzug 5 ausgebildet. Radial außen weist das Gehäuse 3 einen Gehäuse-Deckel 7 auf, welcher gegenüber einem Gehäuse-Grundkörper 9 gesondert ausgebildet ist und bei der Montage der Getriebestufe 1 mit dem Gehäuse-Grundkörper 9 fest verbunden wird. Ebenfalls konzentrisch zur ersten Achse A ist am Gehäuse 3 ein Antrieb 11 gelagert. Der Antrieb 11 weist ein hohlzylindrisches, zur ersten Achse A konzentrisches, durch den Gehäuse-Kragenzug 5 gestecktes Antriebs-Rohr 13 mit stirnseitig einem radial nach außen abstehenden Antriebs-Flansch 15 und einem daran angeformten, zur ersten Achse A konzentrischen, den Gehäuse-Kragenzug 5 übergreifenden Antriebs-Lagerring 17 auf. Zwischen der Innenseite des Antriebs-Lagerrings 17 und der Außenseite des Gehäuse-Kragenzugs 5 ist ein Wälzlager 19 angeordnet, beispielsweise ein Kugellager oder bevorzugt ein Nadellager, welches den Antrieb 11 in radialer Richtung (bezüglich der ersten Achse A) eindeutig und reibungsarm lagert.

Ein Abtrieb 21 ist zylindersymmetrisch zu einer zweiten Achse B ausgebildet, welche parallel zur ersten Achse A um eine Exzentrizität E von vorzugsweise weniger als 0,5 mm, beispielsweise 0,2 mm, versetzt angeordnet ist. Der Abtrieb 21 weist ein hohlzylindrisches, zur zweiten Achse B konzentrisches, in das Antriebs-Rohr 13 gestecktes Abtriebs-Rohr 23, eine stirnseitig radial abstehende Abtriebs-Scheibe 25 und einen daran angeformten, zur zweiten Achse B konzentrischen, den Antriebs-Lagerring 17 übergreifenden Abtriebs-Lagerring 27 auf. Auf der dem Antriebs-Lagerring 17 zugewandten Innenseite des Abtriebs-Lagerrings 27 weist der Abtrieb 21 eine ringförmig umlaufende V-Nut auf, kurz als Nut 29 bezeichnet, deren Seitenwände vorzugsweise schräg, beispielsweise um 60°, zur zweiten Achse B verlaufen. Eine einzelne Kugel 31 ist zwischen der Außenseite des Antriebs 11, d.h. der Außenseite des Antriebs-Lagerrings 17, und der die Kugel 31 teilweise aufnehmenden Nut 29 an einer Stelle des Umfangs angeordnet.

Der Abtrieb 21 weist auf seiner Außenseite, d.h. der Außenseite des Abtriebs-Lagerrings 27, einen umlaufenden, radial abstehend angeformten, konzentrisch zur zweiten Achse B ausgebildeten Reifen 33 auf, welcher - in der Art einer Nut-Feder-Verbindung - in eine umlaufende Führung 35 des Gehäuses 3 greift. Die rillenförmige, als Ringnut konzentrisch zur ersten Achse A ausgebildete Führung 35 wird teils durch den Gehäuse-Grundkörper 9 und teils durch den Gehäuse-Deckel 7 auf einer gemeinsamen, radial nach innen weisenden Fläche des Gehäuses 3 gebildet.

Die Seitenwände der Führung 35 verlaufen leicht schräg zu einer zur ersten Achse A senkrechten Ebene, so dass der Reifen 33 nicht vollständig in die Führung 35 bis zu deren Grund eindringen kann, sondern maximal bis zu einem Wälzpunkt W. Der Reifen 33, d.h. der Abtrieb 21, und die Führung 35, d.h. das Gehäuse 3, bilden ein Reibradgetriebe, nachfolgend als Reibradtaumelgetriebe bezeichnet. Auf der dem Wälzpunkt W radial gegenüberliegenden Seite ist der Abstand zwischen dem Reifen 33 und der Führung 35 bzw. dem Abtrieb 21 und dem Gehäuse 3 um 2xE größer als am Wälzpunkt W. Ebenso ist der Abstand zwischen dem Antrieb 11 und dem Abtrieb 21 an der zum Wälzpunkt W nächstgelegenen Stelle um 2xE größer als der entsprechende Abstand auf der radial gegenüber liegenden Seite. Es besteht somit eine quasi umlaufend gebogene Keilfläche sowohl zwischen dem Abtrieb 21 und dem Gehäuse 3 als auch zwischen dem Abtrieb 21 und dem Antrieb 11. Die Kontaktpunkte zwischen Gehäuse 3, Antrieb 11 und Abtrieb 21 liegen im wesentlichen in der gleichen Ebene, welche senkrecht zu den Achsen A und B verläuft.

Die Außenseite des Antriebs 11, die Kugel 31 und die Nut 29 bilden gemeinsam eine Geometrie, in der sich die Kugel 31 zwischen Antrieb 11 und Abtrieb 21 verkeilt, da der Kontaktwinkel kleiner als der Selbsthemmungswinkel ist und somit keine Gleitreibung an den Kontaktstellen der Kugel 31 auftritt, wie es beispielsweise auch bei Klemmrollen-Freiläufen bekannt ist. Bei stillstehendem Antrieb 11 liegt die Kugel 31 zunächst - in Umfangsrichtung der ersten Achse A betrachtet - beim gleichen Winkel wie der Wälzpunkt W und damit ohne radiale Vorspannung zwischen dem Antrieb 11 und der Nut 29. Wird hingegen der Antrieb 11 angetrieben, so bewegt sich die Kugel 31 mit, bis das vorgenannte Verkeilen eintritt. Die Kugel 31 eilt dem Wälzpunkt W voraus, bei den vorliegenden Geometrien und Materialien um etwa 45° (Voreilwinkel).

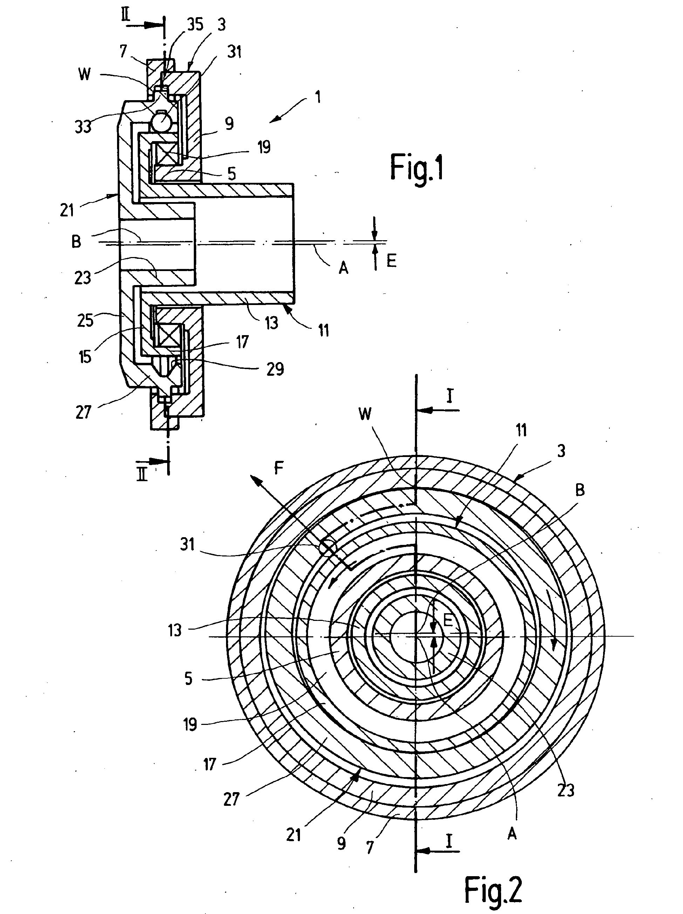

In Fig. 2 wird der Antrieb 11 gegen den Uhrzeigersinn angetrieben, so dass die Kugel 31 an der Außenseite des Abtriebs 11 abrollt, d.h. sie dreht sich in Fig. 2 im Uhrzeigersinn. Dies führt zu einer relativen Abwälzbewegung der Kugel 31 in der Nut 29 und wegen des Verkeilens zu einer erhebliche Kraft F im Kontaktpunkt zwischen Kugel 31 und Abtrieb 21. Da der Abtrieb 21 am Wälzpunkt W am Gehäuse 3 anliegt, d.h. der Wälzpunkt W ein Momentanpol bildet, bewirkt die Kraft F ein Drehmoment auf den Abtrieb 21 um den Wälzpunkt W. Dies führt zu einer taumelnden Abwälzbewegung des Abtriebs 21 am Gehäuse 3, in Fig. 2 im Uhrzeigersinn. Wird die Drehrichtung des Antriebs 11 umgedreht, so dreht sich nach einem Leerweg von zweimal dem Voreilwinkel der Kugel 31 die Drehrichtung des Abtriebs 21 ebenfalls um. Um die momentanen Reibwerte an den Stellen mit hoher Flächenpressung bei geringerem Verschleiß zu erhöhen, beispielsweise an der Kugel 31 oder dem Wälzpunkt W, kann ein geeigneter Schmierstoff vorgesehen werden.

Die Getriebestufe 1 ist als Reibradtaumelgetriebe mit Wälzexzenter zweistufig ausgebildet. Der Wälzexzenter mit der Kugel 31 hat durch die Wälzbewegung der Kugel 31 zwischen Antrieb 11 und Abtrieb 21 zunächst ein theoretisches Übersetzungsverhältnis von ungefähr 2:1. Durch die Nut 29, welche für einen gegenüber dem Radius der Kugel 31 kleineren Abwälzradius zum Abtrieb 21 hin sorgt, ergibt sich ein Übersetzungsanteil von vorliegend zusätzlich 4:1. Die Stufe des Reibradtaumelgetriebes ergibt einen Anteil am Übersetzungsverhältnis von etwa dem Außendurchmesser des Abtriebs 21 (Durchmesser des Gehäuses 3 am Wälzpunkt W) zu 2xE, vorliegend etwa 125:1. Insgesamt kann also die Drehung des Antriebs 11 um mehre Größenordnungen untersetzt werden. Mit kleiner werdender Exzentrizität E werden die störenden Effekte geringer und das Übersetzungsverhältnis (bzw. Untersetzungsverhältnis) steigt. Damit die Getriebeelemente die aus den Antriebsmomenten resultierenden Kontaktkräfte und Belastungen zerstörungsfrei ertragen, werden hierfür bevorzugt hochfeste metallische Materialien verwendet. Es ist aber auch denkbar, durch Verwendung von hochfestem Kunststoff, beispielsweise für den Abtrieb 21, eine elastische Oberfläche zur Schwingungsdämpfung und für deutlich größere Kontaktflächen zu erhalten.

Um die Ausbildung von unrunden Oberflächen bei einem Stillstand zu vermeiden, ist am Ende des Einsatzes vorzugsweise vorgesehen, den Antrieb 11 um einen Freidrehwinkel (fest vorgegeben, z.B. 90°, oder elektronisch ermittelt) zurückzudrehen, damit die Kugel 31 um ihren Voreilwinkel zurückrollen kann und in der geringstmöglichen Nachbarschaft des Wälzpunktes W zu liegen kommt, wo sie keine Kraft F mehr aufbaut.

Um beim Betrieb den Kontakt der Kugel 31 am Antrieb 11 und damit das oben genannte Verkeilen zu verbessern, d.h. um ein "Durchrutschen" an dieser Stelle möglichst zu vermeiden, besteht in abgewandelter Ausführung vorzugsweise immer eine geringe Reibung zwischen Antrieb 11 und Kugel 31, ohne dass die Rotation behindert wird. Diese geringe Reibung kann beispielsweise mittels der Normalkraft einer Feder zwischen Antrieb 11 und Kugel 31 oder durch eine Magnetisierung eines der Bauteile aufgebracht werden. Um den Leerweg der Kugel 31 bei der Richtungsumkehr zu verringern, können in abgewandelter Ausführung zwei Kugeln 31 vorgesehen sein, die durch Federn zusammen oder auf Abstand gehalten werden. Die Getriebestufe 1 wird dadurch auch selbsthemmend.

Die erfindungsgemäße Getriebestufe 1 wird in einem ersten Anwendungsbeispiel mit einem Motor 41 zu einer Antriebseinheit 43 kombiniert. Vorliegend sind Getriebestufe 1 und Motor 41 ineinander integriert, indem am Antrieb 11, vorzugsweise am Antriebs-Rohr 13, mehrere Permanentmagnete als Rotormagnete 45 angebracht sind, womit der Antrieb 11 zum Rotor wird, und indem im Gehäuse 3 mehrere Statorpakete 47 angeordnet sind, die mit den Rotormagneten 45 berührungslos zusammenwirken. Eine Steuerung 49 sorgt für eine elektronische Kommutierung der Statorpakete 47 und damit des Motors 41. Zur Rückkopplung für eine Drehzahlregelung ist am Abtrieb 21, vorzugsweise am Abtriebs-Rohr 23, ein Magnetring 51 angebracht, welcher mit einem an die Steuerung 49 angeschlossenen Hall-Sensor 53 im Gehäuse 3 zusammenwirkt, um die Winkellage des Abtriebs 21 zu erfassen. Bis auf die elektronischen Bauteile des Motors 41 bildet die Getriebestufe 1 eine lackierfähige Einheit.

Die erfindungsgemäße Getriebestufe 1 wird in einem zweiten Anwendungsbeispiel mit einem Getriebebeschlag 61 zu einem Stellantrieb 63 in einem Fahrzeug, insbesondere für einen Fahrzeugsitz, kombiniert. Ein solcher Getriebebeschlag 61 ist als Lehnenneigungseinsteller für einen Fahrzeugsitz in der DE 101 44 840 A1 beschrieben, deren Offenbarungsgehalt ausdrücklich einbezogen wird. Der als selbsthemmendes Exzenterumlaufgetriebe ausgebildete Getriebebeschlag 61 weist ein erstes Beschlagteil 65, welches als Hohlrad ausgebildet ist, und ein zweites Beschlagteil 67 auf, welches ein mit dem Hohlrad kämmendes, angeformtes Zahnrad aufweist. Das erste Beschlagteil 65 ist beispielsweise fest mit der Lehne des Fahrzeugsitzes verbunden, während das zweite Beschlagteil 67 mit dem Sitzteil des Fahrzeugsitzes verbunden ist. Ein zweiteiliger (oder wahlweise einteiliger) Mitnehmer 69 definiert zusammen mit zwei gegeneinander verspannten Keilsegmenten 71 einen Exzenter, der zwischen erstem Beschlagteil 65 und zweitem Beschlagteil 67 gelagert ist und bei einer Drehung eine taumelnde Abwälzbewegung des ersten Beschlagteils 65 am zweiten Beschlagteil 67 bewirkt.

Zur Kombination der Getriebestufe 1 mit dem Getriebebeschlag 61 ist das Gehäuse 3 mittels seines Gehäuse-Deckels 7 am ersten Beschlagteil 65 angebracht, während eine außenprofilierte Welle 73 an einem Ende in ein Innenprofil des Abtriebs-Rohres 23 und am anderen Ende in ein Innenprofil des Mitnehmers 69 greift. Dabei ist zwischen den Profilen jeweils etwas Spiel vorgesehen, um die taumelnde Bewegung des Abtriebs 21 auszugleichen. Die taumelnde Bewegung könnte auch durch andere Mittel, insbesondere elastische Mittel, ausgeglichen werden.

Der Stellantrieb 63 könnte auch die Höhe und/oder die Neigung der Sitzfläche des Fahrzeugsitzes einstellen.

Durch Kombination des ersten und zweiten Anwendungsbeispiels wird der Stellantrieb 63 durch einen Motor 41 vervollständigt.

Das zweite Ausführungsbeispiel gleicht dem ersten Ausführungsbeispiel, soweit nachfolgend nicht abweichend beschrieben, weshalb gleiche und gleichwirkende Bauteile um 100 höhere Bezugszeichen tragen. Einzelne oder mehrere Merkmale des ersten Ausführungsbeispiels können auch in Kombination mit den Merkmalen des zweiten Ausführungsbeispiels verwirklicht sein und umgekehrt.

Im zweiten Ausführungsbeispiel weist eine Getriebstufe 101 ein näherungsweise zylindersymmetrisches Gehäuse 103 mit einer zentralen ersten Achse A auf. Konzentrisch zur ersten Achse A ist am Gehäuse 103 radial innen ein Gehäuse-Kragenzug 105 ausgebildet. Radial außen weist das Gehäuse 103 einen Gehäuse-Deckel 107 auf, welcher gegenüber einem Gehäuse-Grundkörper 109 gesondert ausgebildet ist und bei der Montage der Getriebestufe 101 mit dem Gehäuse-Grundkörper 109 fest verbunden wird. Ebenfalls konzentrisch zur ersten Achse A ist am Gehäuse 103 ein Antrieb 111 gelagert. Der Antrieb 111 weist ein hohlzylindrisches, zur ersten Achse A konzentrisches, durch den Gehäuse-Kragenzug 105 gestecktes Antriebs-Rohr 113 mit stirnseitig einem radial nach außen abstehenden Antriebs-Flansch 115 und einem daran angeformten, zur ersten Achse A konzentrischen, den Gehäuse-Kragenzug 105 übergreifenden Antriebs-Lagerring 117 auf. Zwischen der Innenseite des Antriebs-Lagerrings 117 und der Außenseite des Getriebe-Kragenzugs 105 ist ein Wälzlager 119 angeordnet, beispielsweise ein Kugellager oder bevorzugt ein Nadellager, welches den Antrieb 111 in radialer Richtung (bezüglich der ersten Achse A) eindeutig und reibungsarm lagert.

Ein Abtrieb 121 ist zylindersymmetrisch zu einer zweiten Achse B ausgebildet, welche parallel zur ersten Achse A um eine Exzentrizität E von vorzugsweise weniger als 0,5 mm, beispielsweise 0,2 mm, versetzt angeordnet ist. Der Abtrieb 121 weist ein hohlzylindrisches, zur zweiten Achse B konzentrisches, in das Antriebs-Rohr 113 gestecktes Abtriebs-Rohr 123, eine stirnseitig radial abstehende Abtriebs-Scheibe 125 und einen daran angeformten, zur zweiten Achse B konzentrischen, den Antriebs-Lagerring 117 übergreifenden Abtriebs-Lagerring 127 auf. Auf der dem Antriebs-Lagerring 117 zugewandten Innenseite des Abtriebs-Lagerrings 127 weist der Abtrieb 121 eine ringförmig umlaufende, im Profil gekrümmte Nut 129 auf. Zwei einzelne Kugeln 131 sind zwischen der Außenseite des Antriebs 111, d.h. der Außenseite des Antriebs-Lagerrings 117, und der die Kugeln 131 teilweise aufnehmenden Nut 129 an jeweils einer Stelle des Umfangs angeordnet.

Der Abtrieb 121 weist auf seiner Außenseite, d.h. der Außenseite des Abtriebs-Lagerrings 127, einen umlaufenden, radial abstehend angeformten, konzentrisch zur zweiten Achse B ausgebildeten Reifen 133 auf, welcher - in der Art einer Nut-Feder-Verbindung - in eine umlaufende Führung 135 des Gehäuses 103 greift. Die rillenförmige, als Ringnut konzentrisch zur ersten Achse A ausgebildete Führung 135 wird teils durch den Gehäuse-Grundkörper 109 und teils durch den Gehäuse-Deckel 107 auf einer gemeinsamen, radial nach innen weisenden Fläche des Gehäuses 103 gebildet.

Die Seitenwände der Führung 135 verlaufen leicht schräg zu einer zur ersten Achse A senkrechten Ebene, so dass der Reifen 133 nicht vollständig in die Führung 135 bis zu deren Grund eindringen kann, sondern maximal bis zu einem Wälzpunkt W.

Der Reifen 133, d.h. der Abtrieb 121, und die Führung 135, d.h. das Gehäuse 103, bilden ein Reibradgetriebe, nachfolgend als Reibradtaumelgetriebe bezeichnet. Auf der dem Wälzpunkt W radial gegenüberliegenden Seite ist der Abstand zwischen dem Reifen 133 und der Führung 135 bzw. dem Abtrieb 121 und dem Gehäuse 103 um 2xE größer als am Wälzpunkt W. Ebenso ist der Abstand zwischen dem Antrieb 111 und dem Abtrieb 121 an der zum Wälzpunkt W nächstgelegenen Stelle um 2xE größer als der entsprechende Abstand auf der radial gegenüber liegenden Seite. Es besteht somit eine quasi umlaufend gebogene Keilfläche sowohl zwischen dem Abtrieb 121 und dem Gehäuse 103 als auch zwischen dem Abtrieb 121 und dem Antrieb 111. Die Kontaktpunkte zwischen Gehäuse 103, Antrieb 111 und Abtrieb 121 liegen im wesentlichen in der gleichen Ebene, welche senkrecht zu den Achsen A und B verläuft.

Die Außenseite des Antriebs 111, die Kugeln 131 und die Nut 129 bilden gemeinsam eine Geometrie, in der sich die dem Wälzpunkt W (um einen Voreilwinkel) vorauseilende Kugel 131 zwischen Antrieb 111 und Abtrieb 121 verkeilen können, da der Kontaktwinkel kleiner als der Selbsthemmungswinkel ist und somit keine Gleitreibung an den Kontaktstellen der Kugel 131 auftritt, wie es beispielsweise auch bei Klemmrollen-Freiläufen bekannt ist. Entsprechend verkeilt die dem Wälzpunkt W nacheilende Kugel 131 nicht. Wird der Antrieb 111 angetrieben, so rollen die Kugeln 131 an der Außenseite des Abtriebs 111 ab. Dies führt zu einer relativen Abwälzbewegung der Kugeln 131 in der Nut 129 und wegen des Verkeilens der vorauseilenden Kugel 131 zu einer erhebliche Kraft im Kontaktpunkt zwischen der vorauseilenden Kugel 131 und dem Abtrieb 121. Da der Abtrieb 121 am Wälzpunkt W am Gehäuse 103 anliegt, d.h. der Wälzpunkt W ein Momentanpol bildet, bewirkt die besagte Kraft ein Drehmoment auf den Abtrieb 121 um den Wälzpunkt W. Dies führt zu einer taumelnden Abwälzbewegung des Abtriebs 121 am Gehäuse 103. Wird die Drehrichtung des Antriebs 111 umgedreht, so dreht sich nach einem minimalen Leerweg (bis zum Verklemmen der anderen Kugel 131) die Drehrichtung des Abtriebs 121 ebenfalls um. Um die momentanen Reibwerte an den Stellen mit hoher Flächenpressung bei geringerem Verschleiß zu erhöhen, beispielsweise an den Kugeln 131 oder dem Wälzpunkt W, kann ein geeigneter Schmierstoff vorgesehen werden. Die Getriebestufe 101 wird selbsthemmend, wenn die Kugeln 131 durch Federn zusammen oder auf Abstand gehalten werden.

Die Getriebestufe 101 ist als Reibradtaumelgetriebe mit Wälzexzenter zweistufig ausgebildet. Der Wälzexzenter mit den Kugeln 131 hat durch die Wälzbewegung der Kugeln 131 zwischen Antrieb 111 und Abtrieb 121 zunächst ein theoretisches Übersetzungsverhältnis von ungefähr 2:1. Durch die Nut 129, welche für einen gegenüber dem Radius der Kugeln 131 kleineren Abwälzradius zum Abtrieb 121 hin sorgt, ergibt sich ein Übersetzungsanteil von vorliegend zusätzlich 4:1. Die Stufe des Reibradtaumelgetriebes ergibt einen Anteil am Übersetzungsverhältnis von etwa dem Außendurchmesser des Abtriebs 121 (Durchmesser des Gehäuses 103 am Wälzpunkt W) zu 2xE, vorliegend etwa 125:1. Insgesamt kann also die Drehung des Antriebs 111 um mehre Größenordnungen untersetzt werden. Mit kleiner werdender Exzentrizität E werden die störenden Effekte geringer und das Übersetzungsverhältnis (bzw. Untersetzungsverhältnis) steigt.

Wenigstens eines der Getriebeelemente Gehäuse 103, Antrieb 111 und Abtrieb 121, vorzugsweise alle, bestehen erfindungsgemäß aus einem Kunststoff-Metall-Verbundmaterial. Die darin enthaltenen Metallteile ermöglichen, dass die Getriebeelemente die aus den Antriebsmomenten resultierenden Kontaktkräfte und Belastungen zerstörungsfrei ertragen. Die Herstellung aus dünnen Blechen aus hochfestem Metall (vorzugsweise Stahl) ist bevorzugt, da durch Tiefziehen, Stanzen, Prägen oder dergleichen die erforderliche Genauigkeit und Oberflächenqualität ohne zusätzliche, spanende Nacharbeit erreicht wird. Durch Vergüten können die Festigkeitseigenschaften verbessert werden. Die zusammengehörenden Metallteile werden mit - vorzugsweise hochfest werdendem - Kunststoff umspritzt und dadurch miteinander verbunden. Die Kunststoffbereiche erlauben komplizierte Geometrien und eine kostengünstige Herstellung in den nicht-lastaufnehmenden Bereichen, ein geringeres Gewicht, sehr gute Dämpfungseigenschaften und damit ein verbessertes Geräuschverhalten, und gegebenenfalls eine elastische Oberfläche zur Schwingungsdämpfung und für deutlich größere Kontaktflächen. Soweit nicht anders angegeben, weisen im Ausführungsbeispiel die Metallteile eine - zumindest näherungsweise - konstante Materialstärke auf, während die Kunststoffbereiche den übrigen Raum der entsprechenden Getriebeelemente einnehmen.

Im Ausführungsbeispiel weist das Gehäuse 103 ein Metallteil 103m auf, welches sich vom Gehäuse-Kragenzug 105 durch den des Gehäuse-Grundkörpers 109 bis zur Führung 135 erstreckt, um am Reifen 133 anzuliegen. Ansonsten wird der Gehäuse-Grundkörper 109 von einem Kunststoffbereich 103k des Gehäuses 103 gebildet. Der dem Gehäuse 103 zugeordnete Gehäuse-Deckel 107 weist ein Metallteil 107m, welches sich bis zur Führung 135 erstreckt, um am Reifen 133 anzuliegen, und ansonsten einen Kunststoffbereich 107k auf. Zum Verbinden des Gehäuses 103 und des Gehäuse-Deckels 107 werden die jeweiligen Kunststoffbereiche 103k und 107k miteinander ultraschallverschweißt.

Der Antrieb 111 weist ein erstes Metallteil 111m, welches sich vom Antriebs-Rohr 113 über den Antriebs-Flansch 115 bis zu der dem Wälzlager 119 zugewandten Seite des Antriebs-Lagerrings 117 erstreckt, ein zweites Metallteil 111n, welches auf der den Kugeln 131 zugewandten Seite des Antriebs-Lagerring 117 angeordnet ist, und ansonsten einen Kunststoffbereich 111k im Antriebs-Lagerring 117 auf.

Der Abtrieb 121 weist ein erstes Metallteil 121m, welches im Abtriebs-Lagerring 127 auf der dem Gehäuse 103 und dem Gehäuse-Deckel 107 zugewandten Seite angeordnet ist und sich dabei über den Reifen 133 erstreckt, und ein zweites Metallteil 121n auf, welches im Abtriebs-Lagerring 127 auf der den Kugeln 131 zugewandten Seite angeordnet ist. Der Kunststoffbereich 121k des Abtriebs 121 erstreckt sich vom Inneren des Abtriebs-Lagerrings 127 über die gesamte Abtriebs-Scheibe 125 und das gesamte Abtriebs-Rohr 123.

Analog zum ersten Ausführungsbeispiel kann die Getriebestufe 101 mit einem Motor zu einer Antriebseinheit und/oder mit einem Getriebebeschlag zu einem Stellantrieb kombiniert werden, beispielsweise zur Einstellung der Lehnenneigung eines Fahrzeugsitzes.

### Bezugszeichenliste

- 1, 101: Getriebestufe
- 3, 103: Gehäuse
- 5, 105: Gehäuse-Kragenzug
- 7, 107: Gehäuse-Deckel
- 9, 109: Gehäuse-Grundkörper
- 11, 111: Antrieb
- 13, 113: Antriebs-Rohr
- 15, 115: Antriebs-Flansch
- 17, 117: Antriebs-Lagerring
- 19, 119: Wälzlager
- 21, 121: Abtrieb
- 23, 123: Abtriebs-Rohr
- 25, 125: Abtriebs-Scheibe
- 27, 127: Abtriebs-Lagerring
- 29, 129: (V-)Nut
- 31, 131: Kugel, Wälzkörper
- 33, 133: Reifen
- 35, 135: Führung
- 41: Motor
- 43: Antriebseinheit
- 45: Rotormagnet
- 47: Statorpaket
- 49: Steuerung
- 51: Magnetring
- 53: Hall-Sensor
- 61: Getriebebeschlag
- 63: Stellantrieb
- 65: erstes Beschlagteil
- 67: zweites Beschlagteil
- 69: Mitnehmer
- 71: Keilsegmente
- 73: Welle
- 103k: Kunststoffbereich des Gehäuses
- 103m: Metallteil des Gehäuses
- 107k: Kunststoffbereich des Gehäuse-Deckels
- 107m: Metallteil des Gehäuse-Deckels
- 111k: Kunststoffbereich des Antriebs
- 111m: erstes Metallteil des Antriebs
- 111 n: zweites Metallteil des Antriebs
- 121k: Kunststoffbereich des Abtriebs
- 121m: erstes Metallteil des Abtriebs
- 121n: zweites Metallteil des Abtriebs
- A: erste Achse
- B: zweite Achse
- E: Exzentrizität
- F: Kraft
- W: Wälzpunkt

## Patentansprüche

1. Getriebestufe (1; 101) eines Stellantriebs (63) eines Fahrzeuges, insbesondere für einen Fahrzeugsitz, mit
a) einem Gehäuse (3; 103),
b) einem am Gehäuse (3; 103) um eine erste Achse (A) drehbar gelagerten Antrieb (11; 111)
c) einem um eine von der ersten Achse (A) verschiedene zweite Achse (B) drehbaren Abtrieb (21; 121),
d) einem Wälzexzenter, welcher gebildet wird, indem der Antrieb (11; 111) mittels wenigstens eines gesondert ausgebildeten Wälzkörpers (31; 131) den Abtrieb (21; 121) unter parallelem Versatz der Achsen (A, B) um eine Exzentrizität (E) lagert, wobei der Antrieb (11; 111) bei einer Drehung des so gebildeten Wälzexzenters den Abtrieb (21; 121) antreibt,
e) einem Reibradtaumelgetrieb (33, 35; 133, 135), mittels dessen der angetriebene Abtrieb (21; 121) eine taumelnde Abwälzbewegung am Gehäuse (3; 103) vollführt, wobei der Abtrieb (21; 121) am Gehäuse (3; 103) an einem Wälzpunkt (W) anliegt, welcher den Momentanpol für die taumelnde Abwälzbewegung des Abtriebs (21; 121) bildet,
**dadurch gekennzeichnet, dass**
f) mit der Drehung des Antriebs (11; 111) der als Kugel ausgebildete Wälzkörper (31; 131) sich einerseits teilweise in einer ringförmig umlaufende Nut (29; 129) des Abtriebs (21; 121) oder des Antriebs (11; 111) und andererseits an Außenseite oder Innenseite des jeweils anderen Bauteils abwälzt, wobei die Nut (29; 129) mit Seitenwänden ausgebildet ist, die schräg zu einer zu den Achsen (A, B) senkrechten Ebene verlaufen.

2. Getriebestufe nach Anspruch 1, **dadurch gekennzeichnet, dass** am eine Gehäuses (3; 103) eine ringförmig umlaufende Führung (35; 135) ausgebildet ist, deren Seitenwände leicht schräg zu einer zur ersten Achse (A) senkrechten Ebene verlaufen, und dass am Abtrieb (21; 121) ein umlaufender Reifen (33; 133) ausgebildet ist, der in die Führung (35; 135) nicht-vollständig und maximal bis zum Wälzpunkt (W) eindringt, wobei die Führung (35; 135) und der Reifen (33; 133) das Reibradtaumelgetriebe zwischen dem Gehäuse (3; 103) und dem Abtrieb (21; 121) bilden.

3. Getriebestufe nach Anspruch 1 oder 2, **dadurch gekennzeichnet, dass** mit der Drehung des Antriebs (11; 111) der Wälzkörper (31; 131) sich zwischen Antrieb (11; 111) und Abtrieb (21; 121) verkeilt und eine Kraft (F) aufbaut.

4. Getriebestufe nach Anspruch 3, **dadurch gekennzeichnet, dass** bei Drehung des Antriebs (11; 111) der Wälzkörper (31; 131) dem Wälzpunkt (W) in Drehrichtung voreilt, womit die Kraft (F) im Wälzpunkt (W) ein Moment auf den Abtrieb (21; 121) ausübt.

5. Getriebestufe nach Anspruch 4, **dadurch gekennzeichnet, dass** nach Beendigung seiner Drehung der Antrieb (11; 111) in entgegengesetzter Drehrichtung freigedreht wird, um den Wälzkörper (31; 131) in die geringstmögliche Nachbarschaft des Wälzpunktes (W) zu bringen.

6. Getriebestufe nach einem der vorhergehenden Ansprüche, **dadurch gekennzeichnet, dass** die Kontaktpunkte zwischen Gehäuse (3; 103), Antrieb (11; 111) und Abtrieb (21; 121) im wesentlichen in einer Ebene liegen, welche senkrecht zu den Achsen (A, B) verläuft.

7. Getriebestufe nach einem der vorhergehenden Ansprüche, **dadurch gekennzeichnet, dass** die taumelnde Bewegung des Abtriebs (21; 121) durch Spiel oder andere Mittel ausgeglichen wird.

8. Getriebestufe nach einem der vorhergehenden Ansprüche, **dadurch gekennzeichnet, dass** zwei Wälzkörper (31; 131) vorgesehen sind, von denen einer dem Wälzpunkt (W) voreilt und einer nacheilt, wobei die Wälzkörper (131) vorzugsweise gegeneinander verspannt sind.

9. Getriebestufe nach einem der vorhergehenden Ansprüche, **dadurch gekennzeichnet, dass** wenigstens eines der Getriebeelemente Gehäuse (103), Antrieb (111) und Abtrieb (121) aus einem Kunststoff-Metall-Verbundmaterial besteht, insbesondere wenigstens ein Metallteil (103m, 107m, 111m, 111n, 121m, 121n) und einen Kunststoffbereich (103k, 107k, 111k, 121k) aufweist.

10. Antriebseinheit (43) mit einem Motor (41) und einer Getriebestufe (1; 101) nach einem der Ansprüche 1 bis 9.

11. Stellantrieb (63) mit einer Getriebestufe (1; 101) nach einem der Ansprüche 1 bis 9 und einem Getriebebeschlag (61).

12. Fahrzeugsitz mit einer motorisch einstellbaren Lehne und/oder Sitzfläche, **gekennzeichnet durch** wenigstens einen Stellantrieb (63) nach Anspruch 11.

## Claims

1. Gear stage (1; 101) of an actuating drive (63) of a vehicle, in particular for a vehicle seat, having
(a) a housing (3; 103),
(b) a drive (11; 111) which is supported on the housing (3; 103) so as to be rotatable about a first axis (A),
(c) a power take-off (21; 121) which can be rotated about a second axis (B) which is different from the first axis (A),
(d) an eccentric roller which is formed in that the drive (11; 111) supports the power take-off (21; 121) by means of at least one separately constructed rolling member (31; 131) with parallel displacement of the axes (A, B) by an eccentricity value (E), with the drive (11; 111) driving the power take-off (21; 121) when the eccentric roller formed in this manner is rotated,
(e) a friction gear tumbler mechanism (33, 35; 133, 135), by means of which the driven power take-off (21; 121) carries out a tumbling rolling movement on the housing (3; 103), with the power take-off (21; 121) abutting the housing (3; 103) at a rolling point (W) which forms the instantaneous centre of rotation for the tumbling rolling movement of the power take-off (21; 121),
**characterised in that**
(f) the rolling member (31; 131) which is in the form of a sphere rolls, with the rotation of the drive (11; 111), partially in an annularly extending groove (29; 129) of the power take-off (21; 121) or the drive (11; 111), on the one hand, and, on the other hand, on the outer side or inner side of the other component, respectively, with the groove (29; 129) being formed so as to have side walls which extend obliquely relative to a plane which is perpendicular relative to the axes (A, B).

2. Gear stage according to claim 1, **characterised in that** there is formed on the housing (3; 103) an annularly extending guide (35; 135) whose side walls extend slightly obliquely relative to a plane which is perpendicular relative to the first axis (A), and **in that** there is formed on the power take-off (21; 121) a peripheral band (33; 133) which extends into the guide (35; 135) incompletely and, at a maximum, up to the rolling point (W), with the guide (35; 135) and the band (33; 133) forming the friction gear tumbler mechanism between the housing (3; 103) and the power take-off (21; 121).

3. Gear stage according to claim 1 or 2, **characterised in that** the rolling member (31; 131) becomes wedged between the drive (11; 111) and the power take-off (21; 121) and builds up a force (F) with the rotation of the drive (11; 111).

4. Gear stage according to claim 3, **characterised in that,** when the drive (11; 111) rotates, the rolling member (31; 131) precedes the rolling point (W) in the direction of rotation, whereby the force (F) at the rolling point (W) applies a moment to the power take-off (21; 121).

5. Gear stage according to claim 4, **characterised in that,** after the drive (11; 111) has completed its rotation, it is rotated freely in the opposite direction of rotation in order to move the rolling member (31; 131) into the closest possible position adjacent to the rolling point (W).

6. Gear stage according to any one of the preceding claims, **characterised in that** the contact points between the housing (3; 103), drive (11; 111) and power take-off (21; 121) are substantially in one plane which extends perpendicularly relative to the axes (A, B).

7. Gear stage according to any one of the preceding claims, **characterised in that** the tumbling movement of the power take-off (21; 121) is compensated for by clearance or other means.

8. Gear stage according to any one of the preceding claims, **characterised in that** there are provided two rolling members (31; 131), of which one precedes and one follows the rolling point (W), with the rolling members (131) preferably being tensioned relative to each other.

9. Gear stage according to any one of the preceding claims, **characterised in that** at least one of the transmission elements, the housing (103), the drive (111) and the power take-off (121), comprise(s) a plastics/metal composite material, particularly at least one metal portion (103m, 107m, 111m, 111n, 121m, 121n) and a plastics material region (103k, 107k 111k, 121k).

10. Drive unit (43) having a motor (41) and a gear stage (1; 101) according to any one of claims 1 to 9.

11. Actuating drive (63) having a gear stage (1; 101) according to any one of claims 1 to 9 and a gear assembly (61) .

12. Vehicle seat having a backrest and/or seat face which can be adjusted in a motor-driven manner, **characterised by** at least one actuating drive (63) according to claim 11.

## Revendications

1. Étage de transmission (1 ; 101) d'un mécanisme de réglage (63) d'un véhicule automobile, en particulier pour un siège de véhicule, comportant :
a) un boîtier (3 ; 103) ;
b) un système d'entraînement (11 ; 111) monté à rotation sur le boîtier (3 ; 103) autour d'un premier axe (A) ;
c) un arbre de sortie (21 ; 121) apte à tourner autour d'un deuxième axe (B) différent du premier axe (A) ;
d) un excentrique de roulement, lequel est formé en ce que le système d'entraînement (11 ; 111) sert de logement, au moyen d'au moins un corps de roulement (31 ; 131) réalisé de façon séparée, à l'arbre de sortie (21 ; 121) avec décalage parallèle des axes (A, B) d'une excentricité (E), le système d'entraînement (11 ; 111) entraînant l'arbre de sortie (21 ; 121) lors d'une rotation de l'excentrique de roulement ainsi formé ;
e) un mécanisme oscillant à roue de friction (33, 35 ; 133 ; 135), au moyen duquel l'arbre de sortie entraîné (21 ; 121) effectue un mouvement de roulement en nutation sur le boîtier (3 ; 103), l'arbre de sortie (21 ; 121) étant appliqué sur le boîtier (3 ; 103) en un point primitif (W), lequel forme le centre instantané de rotation pour le mouvement de roulement en nutation de l'arbre de sortie (21 ; 121),
**caractérisé par le fait que** :
f) avec la rotation du système d'entraînement (11 ; 111), le corps de roulement (31 ; 131) réalisé sous la forme d'une sphère roule, d'une part, en partie dans une rainure périphérique annulaire (29 ; 129), de l'arbre de sortie (21 ; 121) ou du système d'entraînement (11 ; 111) et, d'autre part, sur le côté externe ou le côté interne de l'autre élément respectif, la rainure (29 ; 129) étant réalisée avec des parois latérales qui s'étendent de façon inclinée par rapport à un plan perpendiculaire aux axes (A, B).

2. Étage de transmission selon la revendication 1, **caractérisé par le fait que**, sur un boîtier (3 ; 103), est réalisé un guide périphérique annulaire (35 ; 135), dont les parois latérales s'étendent légèrement en oblique par rapport à un plan perpendiculaire au premier axe (A), et que, sur l'arbre de sortie (21 ; 121), est formé un collier périphérique (33 ; 133), qui pénètre dans le guide (35 ; 135) non complètement et au maximum jusqu'au point primitif (W), le guide (35 ; 135) et le collier (33 ; 133) formant le mécanisme oscillant à roue de friction entre le boîtier (3 ; 103) et l'arbre de sortie (21 ; 121).

3. Étage de transmission selon l'une des revendications 1 ou 2, **caractérisé par le fait qu'**avec la rotation du système d'entraînement (11 ; 111), le corps de roulement (31, 131) se coince entre système d'entraînement (11 ; 111) et arbre de sortie (21 ; 121) et génère une force (F).

4. Étage de transmission selon la revendication 3, **caractérisé par le fait que**, lors de la rotation du système d'entraînement (11 ; 111), le corps de roulement (31, 131) est en avant du point primitif (W) dans le sens de rotation, avec quoi la force (F) dans le point primitif (W) exerce un moment sur l'arbre de sortie (21 ; 121).

5. Étage de transmission selon la revendication 4, **caractérisé par le fait qu'**après l'achèvement de sa rotation, le système d'entraînement (11 ; 111) est amené à tourner librement dans le sens de rotation opposé pour amener le corps de roulement (31 ; 131) dans le voisinage le plus proche possible du point primitif (W).

6. Étage de transmission selon l'une des revendications précédentes, **caractérisé par le fait que** les points de contact entre boîtier (3 ; 103), système d'entraînement (11 ; 111) et arbre de sortie (21 ; 121) s'étendent sensiblement dans un plan, lequel s'étend perpendiculairement aux axes (A, B).

7. Étage de transmission selon l'une des revendications précédentes, **caractérisé par le fait que** le mouvement oscillant de l'arbre de sortie (21 ; 121) est compensé par un jeu ou un autre moyen.

8. Étage de transmission selon l'une des revendications précédentes, **caractérisé par le fait que** deux corps de roulement (31 ; 131) sont prévus, dont l'un est en avant et l'autre est en arrière du point primitif (W), les corps de roulement (131) étant de préférence contraints l'un contre l'autre.

9. Étage de transmission selon l'une quelconque des revendications précédentes, **caractérisé par le fait qu'**au moins l'un des éléments de transmission boîtier (103), système d'entraînement (111) et arbre de sortie (121) se compose d'une matière composite matière plastique-métal, en particulier présente au moins une partie métallique (103m, 107m, 111m, 111n, 121m, 121n) et une zone de matière plastique (103k, 107k, 111k, 121k).

10. Unité d'entraînement (43) comportant un moteur (41) et un étage de transmission (1, 101) tel que défini à l'une des revendications 1 à 9.

11. Mécanisme de réglage (63) présentant un étage de transmission (1 ; 101) tel que défini à l'une des revendications 1 à 9 et une armature de transmission (61).

12. Siège de véhicule présentant un dossier et/ou une surface de siège réglable par moteur, **caractérisé par** au moins un mécanisme de réglage (63) tel que défini à la revendication 11.
